Europäisches Patentamt

**European Patent Office**

**Office européen des brevets**

(11) Publication number: **0 153 054**
**A1**

(12) # EUROPEAN PATENT APPLICATION

(21) Application number: **85300655.9**

(22) Date of filing: **31.01.85**

(51) Int. Cl.⁴: **G 21 C 15/10**

(30) Priority: **23.02.84 GB 8404750**

(43) Date of publication of application: **28.08.85**
**Bulletin 85/35**

(84) Designated Contracting States: **DE FR GB IT**

(71) Applicant: **NATIONAL NUCLEAR CORPORATION LIMITED, 1 Stanhope Gate, London W1A 1EH (GB)**

(72) Inventor: **Aspden, Garth James, 36 Druids Close, Egerton Bolton (GB)**

(74) Representative: **Collingwood, Anthony Robert, Patents Branch United Kingdom Atomic Energy Authority 11 Charles II Street, London SW1Y 4QP (GB)**

(54) Improvements in or relating to nuclear reactors or parts thereof.

(57) An arrangement for use in cooling the roof of the containment vault (4) of a liquid metal cooled fast breeder nuclear reactor comprises a plurality of compartments (21) to which coolant gas is supplied via ducts (30) which extend into each compartment (21) and terminate, adjacent the floor (31), in flanges (32) overlying the floor (31). The gas flow initially impinges against the floor (31) and is then deflected radially outwards in the narrow gap between the flange (32) and floor (31) so as to impinge against, and flow upwardly along, side walls (22) before being exhausted via exhaust aperture (34).

1

<u>Improvements in or relating to nuclear reactors and parts thereof.</u>

This invention relates to nuclear reactors and parts thereof and in particular to arrangements for cooling a roof of a vault in which that kind of nuclear reactor known as a liquid metal cooled fast breeder reactor is contained.

According to this invention an arrangement for use in cooling a roof as hereinbefore specified, comprises as part of the roof a plurality of compartments each having a floor and side walls, and in some or each compartment an inlet duct for conveying cooling gas and extending towards the floor of the respective compartment, an external flange on the open termination of the inlet duct and having a peripheral edge spaced from the floor and side walls, and an outlet in the upper region of each compartment, whereby cooling gas can flow through the duct, between the flange and floor, between the peripheral edge and the side walls and leave by the outlet.

The flange may extend towards the floor as the flange extends away from the inlet duct.

The reactor roof preferably has a plurality of such compartments on its underface. The outlets of the compartments are preferably connected with an outlet duct serving a number of compartments.

The said outlet may be an aperture in the side

2

wall of the respective compartment.

The invention also envisages an installation which includes a nuclear reactor of the said kind and having a roof cooled by an arrangement of the kind hereinbefore defined.

The said installation preferably includes means for cooling and recirculating in a closed system the said cooling gas.

The invention may be performed in various ways and one specific embodiment with modifications will now be described by way of example with reference to the accompanying drawings, in which:

Figure 1 is a section through a nuclear reactor;

Figure 2 is a vertical section through part of the reactor roof;

Figure 3 is a horizontal section through one part of the reactor roof;

Figure 4 shows a nozzle arrangement; and

Figure 5 shows another nozzle arrangement.

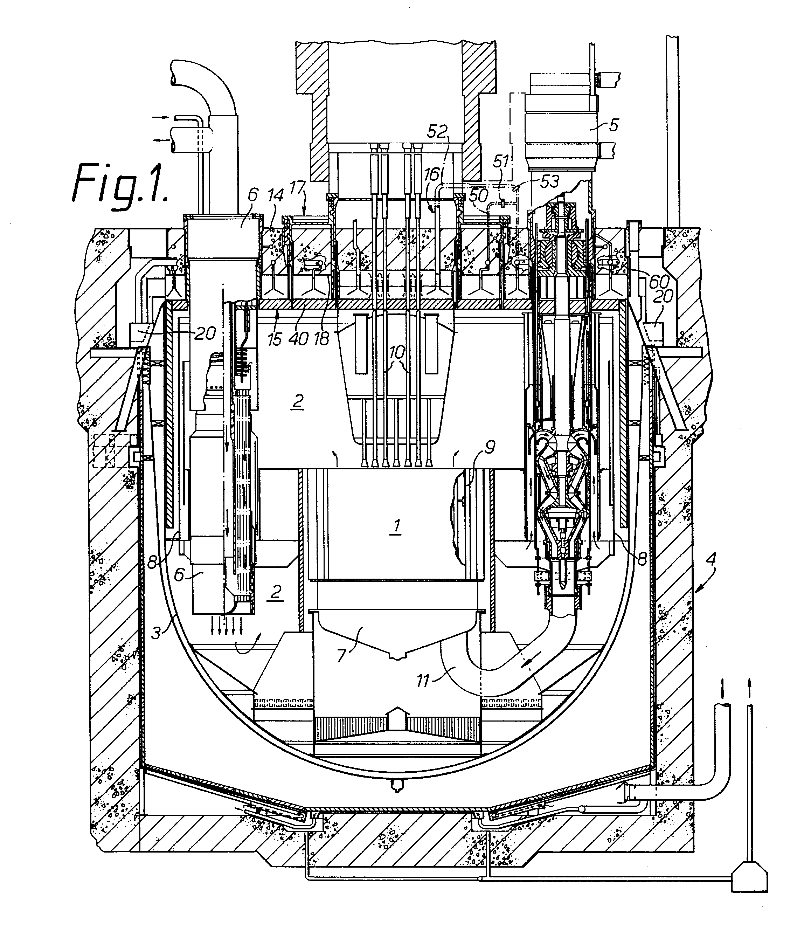

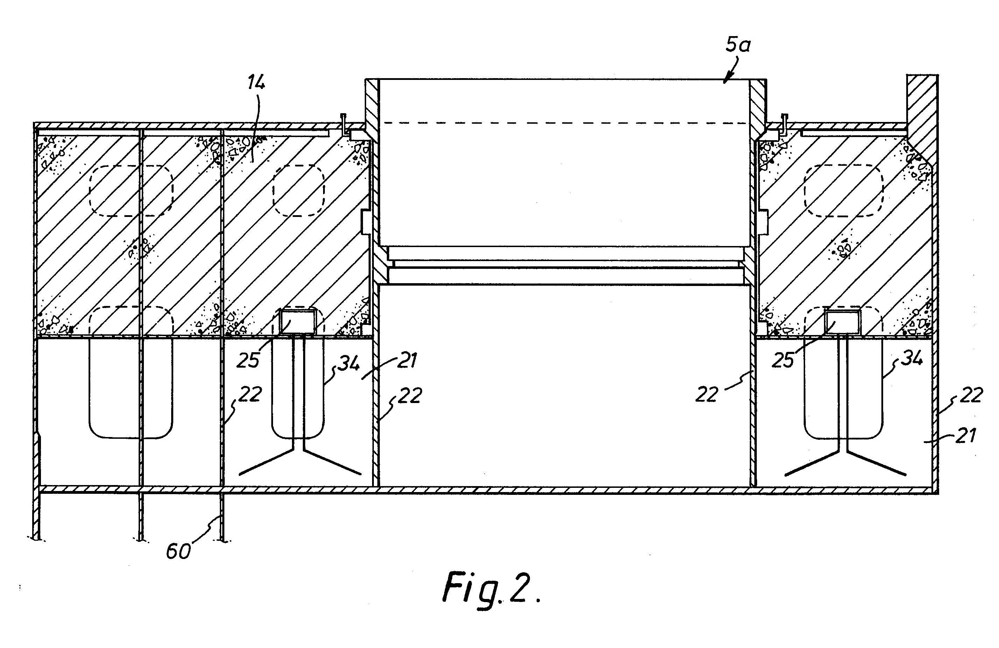

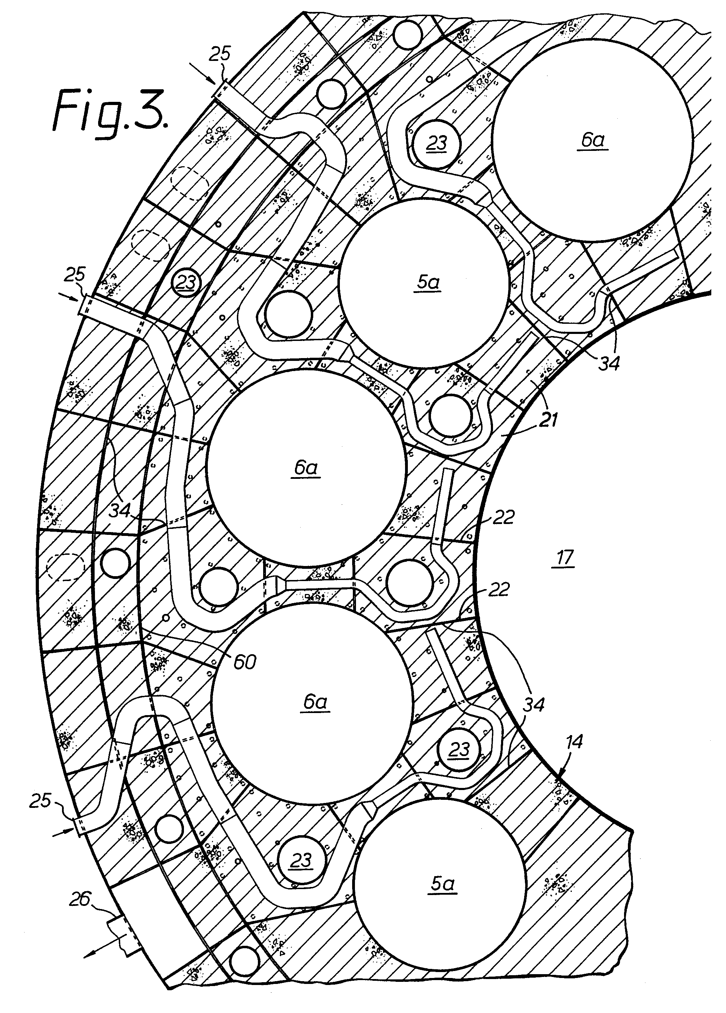

Figure 1 illustrates a liquid metal cooled fast breeder nuclear reactor having a fuel assembly 1 submerged in a pool 2 of liquid sodium coolant in a primary vessel 3. The primary vessel 3 is suspended from the roof of a containment vault 4 and there is provided a plurality of coolant pumps 5 and heat exchangers 6 only one of each being shown. The fuel assembly 1 supported on a diagrid 7 is housed with the heat exchangers 6 and

3

the pumps 5 in a core tank 8. The pumps 5 deliver coolant to the diagrid. The core or fuel assembly 1 comprises a plurality of sub-assemblies which upstand from the diagrid 7 in closely spaced side-by-side array and the fuel assembly 1 is embraced by a core-restraining barrel 9 to provide peripheral restraint. Control rods 10 penetrate the roof 14 of the vault 4 and ducting 11 delivers coolant from the pumps 5 to the diagrid 7. A central part 16 carrying the rods 10 forms an inner rotatable shield and this is surrounded by an outer rotatable annular shield 17.

The underface 18 of the roof 14 is provided with thermal insulation using nitrogen gas as a coolant.

A structure is secured beneath the roof 14 as shown schematically at 15 Figure 1 and takes the form of a plurality of compartments 21 having side walls 22.

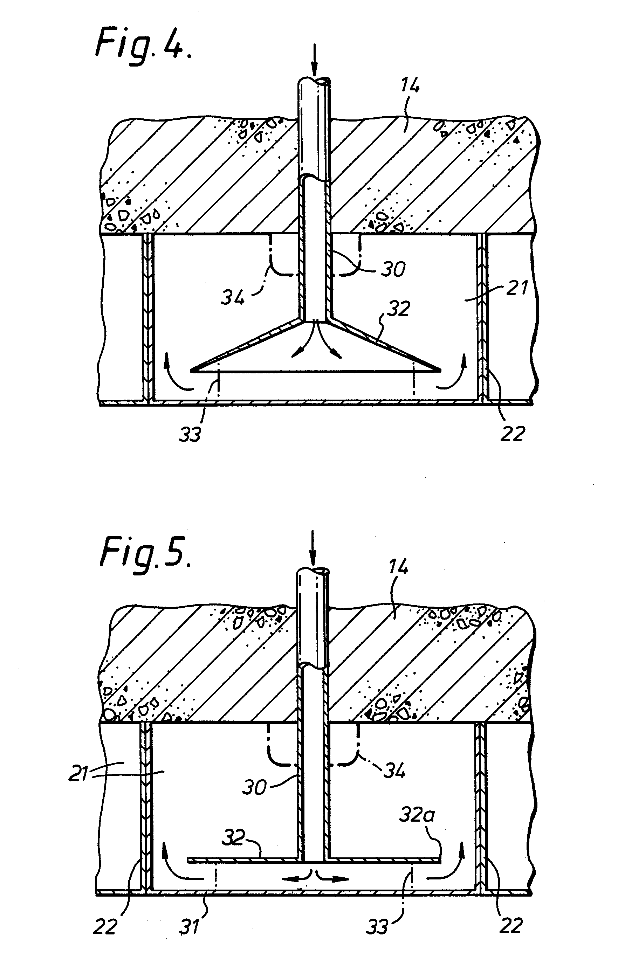

An annular chamber 20 is supplied with coolant gas under pressure from a source not shown. As can be seen in Figure 3, the roof 14 has a number of major penetrations for pumps 5a, for heat exchangers 6a, and a number of minor penetrations 23 for ancillary equipment such as neutron flux instruments, sodium leak detectors and so forth.

Ducts 25 from the plenum 20 supply coolant gas there being outlets from the ducts to the compartments 21, with gas exhaust ducts 26 leading from the compartments 21 to a heat exchanger for cooling of the heated gas before

4

return to ducts 25.

Examples of outlets from the ducts 25 are shown in Figures 4 and 5.

In Figure 5 a single duct 30 leads from duct 25 downwards towards the floor or bottom plate 31 of the compartment 21 and has at its lower end an annular surrounding flange or plate 32 supported a small distance 33 above floor 31 on spaces 33. The outer edge 32a of flange 32 is spaced a distance from the walls 22 to allow flow of gas to an exhaust aperture 34 in wall 22. The compartments 21 are connected via apertures 34 and the gas exhausts through duct 26 (only one shown in Figure 3) Figure 4 shows a preferred arrangement in which flange 32 slopes downwardly as it extends away from duct 30.

Thermal insulation 40 (not shown in Figures 2, 3, 4, 5) is provided beneath compartments 21.

The nozzles in the compartments in the outer rotatable shield 17 are supplied with coolant gas via loop conduits 50 outside the roof 14 including a detachable coupling 51, and outer nozzles in the inner rotatable shield are supplied by loop duct 52 with detachable coupling 53. The couplings 51, 53 are released during rotation of the shields. Alternatively nozzles in the inner and outer rotatable shields can be supplied from an independent source of coolant gas.

The roof 14 may, as shown in Figure 2 and 3, extend beyond the location 60 at the periphery of vessel 8 and

5

have further compartments some of which need not be supplied with coolant gas.

In Figures 4, 5 gas flows down the central tube 30 and then radially outwards through the small gap between plates 31, 32, impinges on walls 22 and then passes to the remainder of the compartments.

Because of the relatively small gap (small distance 33 in Figure 5 is representatively illustrative), relatively high heat transfer coefficient are obtained for reduced quantitites of cooling gas as compared with an arrangement having a plurality of separate nozzles in each compartment discharging directly downwards on to floor 31. Furthermore, heat transfer is more uniform.

40797

Claims

1. An arrangement for use in cooling a roof of a vault in which a liquid metal cooled fast breeder nuclear reactor is contained, such arrangement comprising a plurality of compartments, each compartment comprising a floor and side walls and being characterised by, in some or each compartment, an inlet duct for conveying cooling gas and extending towards the floor of the respective compartment, an external flange on the open termination of the inlet duct and having a peripheral edge spaced from the floor and side walls, and an outlet in the upper region of each compartment, whereby cooling gas can flow through the duct, between the flange and floor, between the peripheral edge and the side walls and leave by the outlet.

2. An arrangement according to claim 1, characterised in that the flange extends towards the floor of the compartment as it extends away from the inlet duct.

3. A roof of a vault containing a nuclear reactor of the kind specified in claim 1, and having an arrangement according to claim 1, characterised in that the plurality of compartments as characterised in claim 1 is disposed on the underface of said roof.

4. A roof according to claim 3, characterised in that the outlets of the compartments are connected and in that a single outlet duct serves a number of compartments.

5. A roof according to claim 3 or claim 4, characterised in that each outlet is an aperture in the side wall of the respective compartment.

6. An installation including a nuclear reactor of the kind specified in claim 1, contained in a vault and having a roof, characterised in that the roof has an arrangement according to any of the preceding claims.

7. An installation according to claim 6, characterised by including means for cooling and recirculating in a closed system the said cooling gas.

40797

Fig.1.

Fig.2.

Fig.3.

*Fig.4.*

14

30

34

32

21

33

22

*Fig.5.*

14

21

30

34

32

32a

22    31    33    22

0153054

European Patent
Office

**EUROPEAN SEARCH REPORT**

Application number

EP 85 30 0655

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 055 643 (CEA) <br> * Claim 1 * | 1 | G 21 C 15/10 |
| A | DE-A-2 623 978 (GHT mbH) <br> * Claims 5,7,8 * | 1,4,3 | |
| A | FR-A-2 235 461 (CEA) <br> * Claims 1,7 * | 1,3 | |
| | ----- | | |
| | | | **TECHNICAL FIELDS SEARCHED (Int. Cl.4)** |
| | | | G 21 C <br> F 27 D <br> F 27 B |

The present search report has been drawn up for all claims

| Place of search | Date of completion of the search | Examiner |
|---|---|---|
| THE HAGUE | 13-05-1985 | JANDL F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82